# EUROPÄISCHE PATENTSCHRIFT

(11) **EP 1 584 502 B1**
(45) Veröffentlichungstag und Bekanntmachung des Hinweises auf die Patenterteilung: **11.11.2009**
(21) Anmeldenummer: 05102596.3
(22) Anmeldetag: 01.04.2005
(51) Int. Cl.: B60G 17/04, B60G 15/12, F16F 9/06, F16F 9/08

(54) **Federungs- und Dämpfungseinrichtung für Kraftfahrzeuge**
Suspension and damping device for motor vehicles
Dispositif de suspension et d'amortissement pour véhicules motorisés

(30) Priorität: 08.04.2004 DE 202004005623 U
(43) Veröffentlichungstag der Anmeldung: 12.10.2005
(60) Teilanmeldung: 09169057.8
(73) Patentinhaber: HEMSCHEIDT FAHRWERKTECHNIK GmbH & Co. KG, 42781 Haan-Gruiten (DE)
(72) Erfinder: Runkel, Walter, Dr., 53547 Leubsdorf (DE)
(74) Vertreter: Patentanwälte Dr. Solf & Zapf

(56) Entgegenhaltungen:
- EP-A- 0 529 320
- EP-A- 1 231 085
- WO-A-03/106202
- DE-C1- 3 902 743
- US-A- 3 677 141
- US-A- 5 246 247
- US-A- 5 413 030
- PATENT ABSTRACTS OF JAPAN Bd. 011, Nr. 258 (M-618), 21. August 1987 (1987-08-21) & JP 62 064603 A (SHOWA SEISAKUSHO:KK), 23. März 1987 (1987-03-23)

## Beschreibung

Die vorliegende Erfindung betrifft eine Federungs- und Dämpfungseinrichtung gemäß dem Oberbegriff des unabhängigen Patentanspruchs 1.

Eine solche Federungs- und Dämpfungseinrichtung ist aus der DE-C-39 02 743 bekannt.

Eine andere Federungs- und Dämpfungseinrichtung ist in einer Ausführung als hydropneumatisches Federungssystem aus der US-A-5 246 247 (Figuren 5 und 6) bekannt. Dabei ist der Federzylinder als Teleskopzylinder, oftmals auch "Federbein" genannt, ausgebildet, der direkt zwischen Rad bzw. Radschwinge und Fahrzeugrahmen montiert wird. Bei dieser bekannten hydropneumatischen Ausführung wirken die beiden über den Kolben getrennten Arbeitsräume des Zylinders hydraulisch gegen jeweils ein pneumatisches Federmedium in jeweils einem zugehörigen hydropneumatischen Federspeicher. Dadurch wird der Kolben beidseitig mit je einer Federkraft beaufschlagt, wobei sich die effektive Tragfederkraft des Federzylinders aus der Differenz der beiden entgegengesetzten Federkräfte ergibt. Zudem ist in jedem der beiden hydraulischen Federkreisläufe ein Dämpfungsventil angeordnet. Durch die Dämpfung (Drosselung) wird das Hydraulikmedium aber rasch und zum Teil stark erwärmt. Diese Erwärmung wirkt sich auch auf das kompressible, insbesondere pneumatische Medium aus, indem dessen Druck und damit auch die Tragfederkraft ansteigen. Daraus resultieren ungünstige, stark variierende Federungs- und Dämpfungseigenschaften.

Die WO 03/106202 A1 beschreibt eine andere Art einer Federungseinrichtung, wobei in einigen Ausführungen eine Dämpfungseinrichtung einen separaten, von dem Federzylinder und dem Federmedium unabhängigen Kreislauf eines hydraulischen Dämpfungsmediums aufweist. Dazu ist mindestens ein separater Dämpfungszylinder mit einem in einem Zylinder relativbeweglich geführten Dämpferkolben sowie mindestens ein hydraulisch mit dem Dämpferzylinder verbundenes Dämpfungsventil erforderlich. Der Kolben des Federzylinders wird über eine von einem Zahnradgetriebe gebildete Antriebseinrichtung angetrieben, die die Schwenkbewegungen eines Rad-Schwingentragarms in die linearen Relativbewegungen zwischen Zylinder und Kolben des Federzylinders umsetzt. Dabei soll die Dämpfungseinrichtung mit der gleichen Antriebseinrichtung wie auch der Federzylinder zusammenwirken, wobei aber die Medien (Feder- und Dämpfungsmedium) vollständig voneinander getrennt sind. Hintergrund ist, dass dadurch keine thermische Abhängigkeit besteht, wodurch dämpfungsbedingte Erwärmungen des Dämpfungsmediums insofern unkritisch sind, als davon die Temperatur des Federmediums und somit auch der Druck und die druckabhängige Tragfederkraft unbeeinflußt bleiben. Im Gegensatz dazu würde eine Erwärmung des Federmediums auch eine Änderung des Druckes und damit der Tragfederkraft bewirken. Diese bekannte Federungs- und Dämpfungseinrichtung hat allerdings einen relativ aufwändigen Aufbau, was sich auch durch ein relativ großes Einbauvolumen und Gewicht bemerkbar macht.

Der vorliegenden Erfindung liegt die Aufgabe zugrunde, eine Federungs- und Dämpfungseinrichtung der eingangs beschriebenen, gattungsgemäßen Art zu schaffen, die sich bei besonders kompakter und leichter Bauform durch optimale Federungs- und Dämpfungseigenschaften auszeichnet.

Erfindungsgemäß wird dies durch die Merkmale des Anspruchs 1 erreicht. Vorteilhafte Ausgestaltungsmerkmale der Erfindung sind in den Unteransprüchen sowie auch in der anschließenden Beschreibung enthalten.

Demnach ist erfindungsgemäß vorgesehen, dass der zylindrische erste Arbeitsraum des Federzylinders dem Federmedium und der hohlzylindrische zweite Arbeitsraum dem Dämpfungsmedium zugeordnet sind, so dass das Federmedium über den Kolben von dem hydraulischen Dämpfungsmedium getrennt ist. Da sich hauptsächlich das hydraulische Dämpfungsmedium bei den Federungsbewegungen erwärmt, ist die erfindungsgemäße Zuordnung zu den Arbeitsräumen vorteilhaft, weil die entstehende Wärme über die Kolbenstange aus dem Federzylinder nach außen geführt wird. Dadurch wirkt die Kolbenstange als Kühlelement zur Kühlung des sich bei Dämpfung bzw. Drosselung erwärmenden Dämpfungsmediums. Die Wärme kann sich somit in einem allenfalls sehr geringen Ausmaß auf das Federmedium übertragen, so dass wärmebedingte Änderungen der Federeigenschaften weitgehend vermieden werden.

Anhand von mehreren, in der Zeichnung veranschaulichten, bevorzugten Ausführungsbeispielen soll die Erfindung im folgenden genauer erläutert werden. Dabei zeigen jeweils in schematischen, teilweise axial geschnittenen Prinzipdarstellungen:
- Fig. 1: eine erste Ausführungsform einer erfindungsgemäßen Federungs- und Dämpfungseinrichtung,
- Fig. 2: eine verkleinerte Ansicht der Einrichtung gemäß Fig. 1 in einem eingefederten Zustand,
- Fig. 3: eine Ansicht analog zu Fig. 2 im ausgefederten Zustand,
- Fig.4: eine zweite Ausführungsform der erfindungsgemäßen Einrichtung in einer Darstellung analog zu Fig. 1,
- Fig. 5 und 6: Darstellungen der Ausführung gemäß Fig. 4 analog zu Fig. 2 und 3,
- Fig. 7 bis 9: Darstellungen analog zu Fig. 1 bis 3 bzw. Fig. 4 bis 6 einer dritten erfindungsgemäßen Ausführungsform,
- Fig. 10: eine weitere Ausführungsform der Erfindung und
- Fig. 11: eine vorteilhafte Ausgestaltung der Erfindung am Beispiel der Ausführung gemäß Fig. 4 bis 6.

In den verschiedenen Figuren der Zeichnung sind gleiche bzw. sich funktionell entsprechende Teile und Komponenten stets mit den gleichen Bezugszeichen versehen. Daher gilt jede Beschreibung eines Teils, die auf eine oder mehrere bestimmte Zeichnungsfiguren Bezug nimmt, analog auch bezüglich der anderen Zeichnungsfiguren, in denen das Teil mit dem entsprechenden Bezugszeichen ebenfalls zu erkennen ist.

Eine erfindungsgemäße Federungs- und Dämpfungseinrichtung 1 besteht in allen Ausführungsbeispielen aus (mindestens) einem Federzylinder 2, der zur direkten Anordnung zwischen einem Fahrzeugrad bzw. einem Rad-Schwingentragarm und einem Fahrzeugrahmen (beides nicht dargestellt) vorgesehen ist. Der Federzylinder 2 besteht teleskopartig aus einem Zylinder 4 und einem darin linear verschiebbar geführten Kolben 6 mit einer Kolbenstange 8, die umfangsgemäß abgedichtet aus dem Zylinder 4 herausgeführt ist.

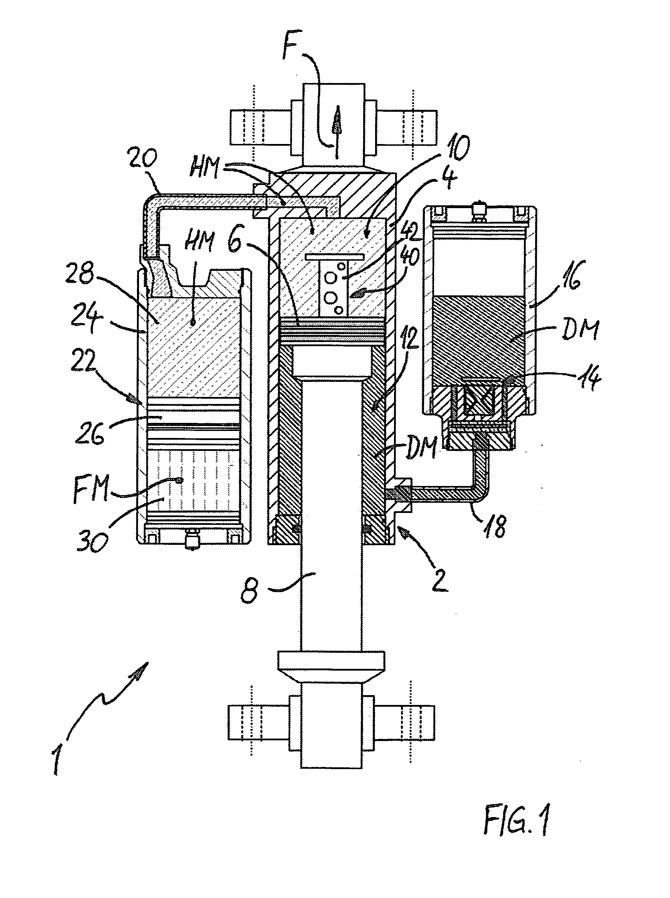

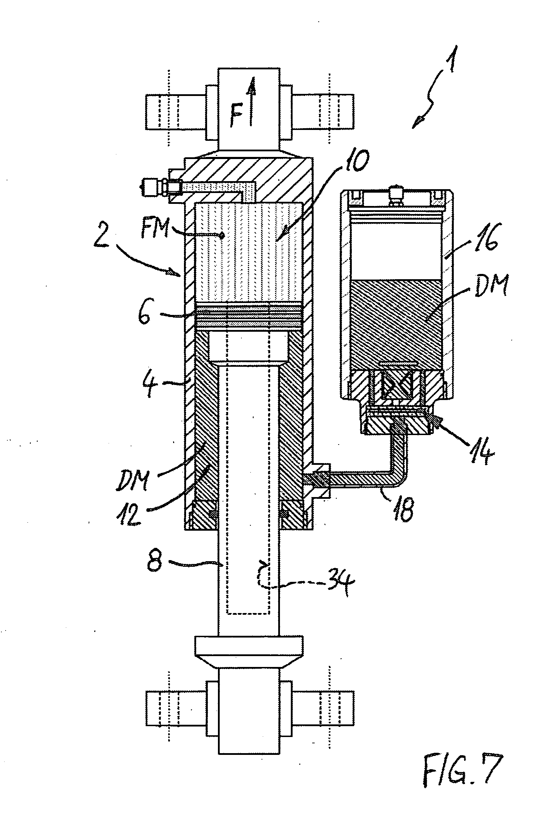

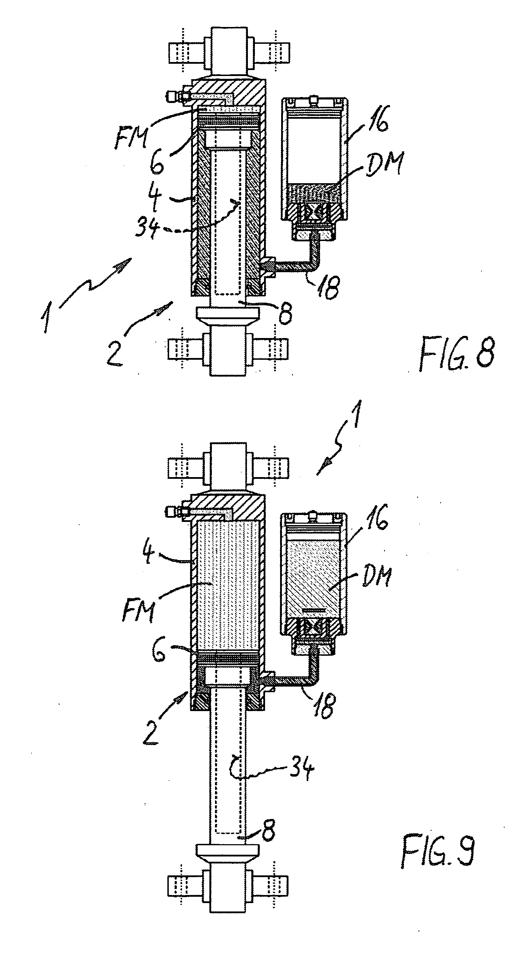

Zur Erzeugung einer lasttragenden Tragfederkraft F wirkt der Kolben 6 mittelbar (z.B. Fig. 1 bis 6) oder unmittelbar (z. B. Fig. 7 bis 10) gegen ein elastisch kompressibles Federmedium FM. Zum Dämpfen von Federungsbewegungen ist ein separater, von dem Federmedium FM unabhängiger Kreislauf eines hydraulischen Dämpfungsmediums DM vorgesehen.

Der Kolben 6 liegt über mindestens eine ringförmige Kolbendichtung an der Innenfläche des Zylinders 4 an. Dadurch trennt der Kolben 6 innerhalb des Zylinders 4 zwei Arbeitsräume voneinander, wobei ein erster Arbeitsraum 10 dem Federmedium FM und ein zweiter Arbeitsraum 12 dem Dämpfungsmedium DM zugeordnet sind. Folglich trennt der Kolben 6 erfindungsgemäß auch einen "Federkreislauf" von einem "Dämpfungskreislauf".

Bei dem dargestellten, bevorzugten Ausführungsbeispiel ist der Federzylinder 2 als Druckzylinder ausgeführt. Dies bedeutet, dass er praktisch als Druckfeder wirkt, um die jeweilige Last abzustützen. Dazu ist der dem Federmedium FM zugeordnete erste Arbeitsraum 10 als zylindrischer Raum auf der der Kolbenstange 8 gegenüberliegenden Seite des Kolbens 6 gebildet. Der zweite Arbeitsraum 12 umschließt ringförmig bzw. hohlzylindrisch die Kolbenstange 8. Da der zweite Arbeitsraum 12 erfindungsgemäß dem Dämpfungsmedium DM zugeordnet ist, wirkt bei dieser Ausgestaltung die Kolbenstange 8 vorteilhafterweise als Kühlelement zur Kühlung des sich bei Dämpfung bzw. Drosselung erwärmenden Dämpfungsmediums DM.

Der zweite Arbeitsraum 12 ist über eine Dämpfungsventilanordnung 14 mit einem Hydraulikbehälter 16 verbunden. Bevorzugt ist die Dämpfungsventilanordnung 14 in einem Einlaßbereich des Hydraulikbehälters 16 integriert angeordnet. Der Hydraulikbehälter 16 ist bevorzugt als gesondertes Bauteil extern, getrennt von dem Federzylinder 2 angeordnet und über eine Leitung 18 mit dem zweiten Arbeitsraum 12 des Federzylinders 2 verbunden. Indem die Dämpfungsventilanordnung 14 integriert im Einlaßbereich des Hydraulikbehälters 16 angeordnet ist, entsteht eine dämpfungs- bzw. drosselbedingte Erwärmung des Dämpfungsmediums DM vorteilhafterweise in einem entfernt von dem Federzylinder 2 und damit auch entfernt von dem Federmedium FM liegenden Bereich. Zudem wird durch den externen Hydraulikbehälter 16 vorteilhafterweise auch eine zusätzliche Kühlwirkung zur Kühlung des Dämpfungsmediums DM erreicht, indem Wärme über eine große Außenfläche (Kühlfläche) an die Umgebung abgegeben wird. Zwar kann ein Wärmeanteil über das Dämpfungsmedium DM auch in den zweiten Arbeitsraum 12 gelangen, jedoch wirkt, wie oben bereits angedeutet wurde, die Kolbenstange 8 als Kühlelement, indem sie von dem Dämpfungsmedium DM umschlossen ist und dadurch dessen Wärme nach außen transportiert. Dies ist besonders effektiv, weil sich die Kolbenstange bei den Federungsbewegungen ja teilweise auch nach außen aus dem Zylinder 4 bewegt und jegliche Wärme dort an die Umgebung abgeben kann. Es kann davon gesprochen werden, dass die Kolbenstange 8 eine Art "Wärmepumpe" bildet. Zusätzlich wird Wärme auch über die Außenfläche des Zylinders 4 an die Umgebung abgegeben. Es werden somit durch die erfindungsgemäße Anordnung insgesamt sehr große Kühlflächen zur effektiven Kühlung des Dämpfungsmediums DM genutzt, so dass ein Wärmeübergang über den Kolben 6 auf das Federmedium vorteilhafterweise allenfalls minimal ist.

Es kommt noch hinzu, dass bei den bevorzugten Ausführungen eine Dämpfung nur im halben Federungszyklus erfolgt, und zwar durch eine entsprechende Ausgestaltung der Dämpfungsventilanordnung 14 (mit Drossel- und Rückschlagventilen) nur beim Ausfedern, während Einfederungsbewegungen nahezu ungedämpft sind, so dass Wärme eigentlich nur beim Ausfedern entsteht. Der Einfederungshub kann zur Kühlung genutzt werden. Beim Einfedern kann auf eine hydraulische Dämpfung verzichtet werden, weil dann das Federmedium FM durch eine ansteigende Federkennlinie quasi dämpfend wirkt.

Der Hydraulikbehälter 16 wird vorzugsweise in einem Fahrzeug so angeordnet, dass er etwa parallel neben dem Federzylinder 2 angeordnet ist, und zwar so, dass das Dämpfungsmedium DM schwerkraftbedingt sich im unteren Bereich befindet. Oberhalb des Dämpfungsmediums DM kann Luft mit Atmosphärendruck angeordnet sein. Es kann aber auch vorgesehen sein, diesen Raum oberhalb des Dämpfungsmediums DM unter einen bestimmten Vorspanndruck von z. B. 3 bis 5 bar zu setzen, um beim Einfedern den Fluss in den zweiten Arbeitsraum hinein zu unterstützen (zu beschleunigen).

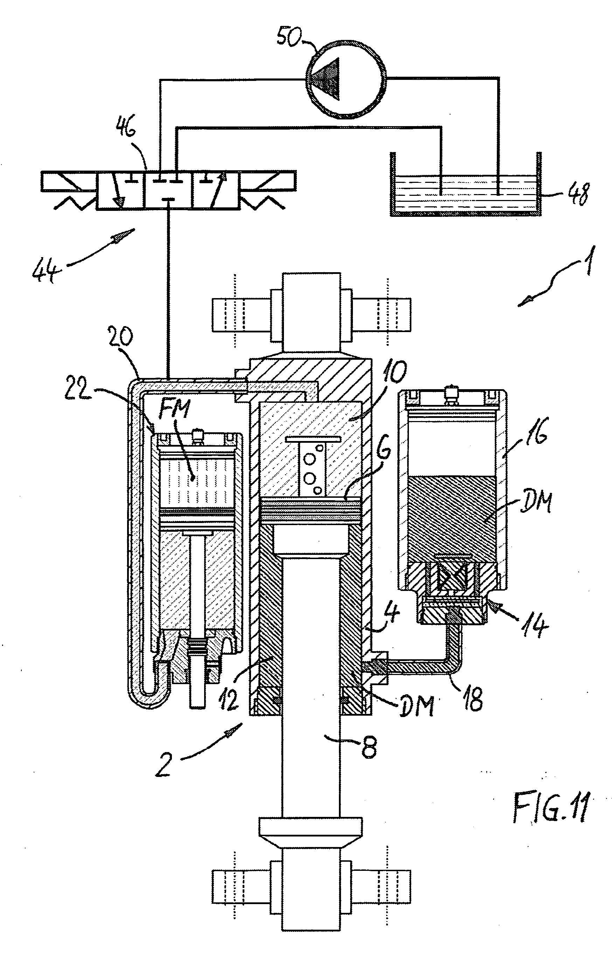

In den Ausführungsformen gemäß Fig. 1 bis 6 und auch gemäß Fig. 11 ist der erste Arbeitsraum 10 über eine Leitung 20 mit einem das elastisch kompressible Federmedium FM enthaltenden Federspeicher 22 verbunden. Dieser Federspeicher 22 ist bevorzugt als hydropneumatischer Kolbenspeicher mit einem in einem Speicherzylinder 24 frei (schwimmend) beweglichen Trennkolben 26 ausgebildet. Der Trennkolben 26 liegt über mindestens einen Dichtring dichtend an der Innenfläche des Speicherzylinders 24 an und trennt dadurch einen hydraulisch über die Leitung 20 mit dem ersten Arbeitsraum 10 verbundenen Speicherraum 28 von einer das Federmedium FM enthaltenden Federkammer 30, wobei der erste Arbeitsraum 10 und der Speicherraum 28 hierbei vollständig mit einem Hydraulikmedium HM gefüllt sind. Somit wirkt hierbei der Kolben 6 des Federzylinders 2 mittelbar über das Hydraulikmedium HM und über den Trennkolben 26 gegen das Federmedium FM innerhalb der Federkammer 30.

Beim Einfedern wird von dem Kolben 6 ein bestimmtes Volumen des Hydraulikmediums HM in den Speicherraum 28 verdrängt, wodurch der Trennkolben 26 gegen das Federmedium FM in Richtung der Federkammer 30 verschoben wird. Durch die daraus resultierende Volumenverminderung erhöht sich der Druck des Federmediums FM und damit auch die Tragkraft F.

Bei der Ausführung gemäß Fig. 1 bis 3 ist der Trennkolben 26 als Trennwand vollständig innerhalb des Speicherzylinders 24 angeordnet. Dadurch muß er eine relativ große axiale Länge aufweisen, um zu vermeiden, dass er innerhalb des Speicherzylinders 24 kippt und dadurch klemmt (sogenannter "Schubladeneffekt").

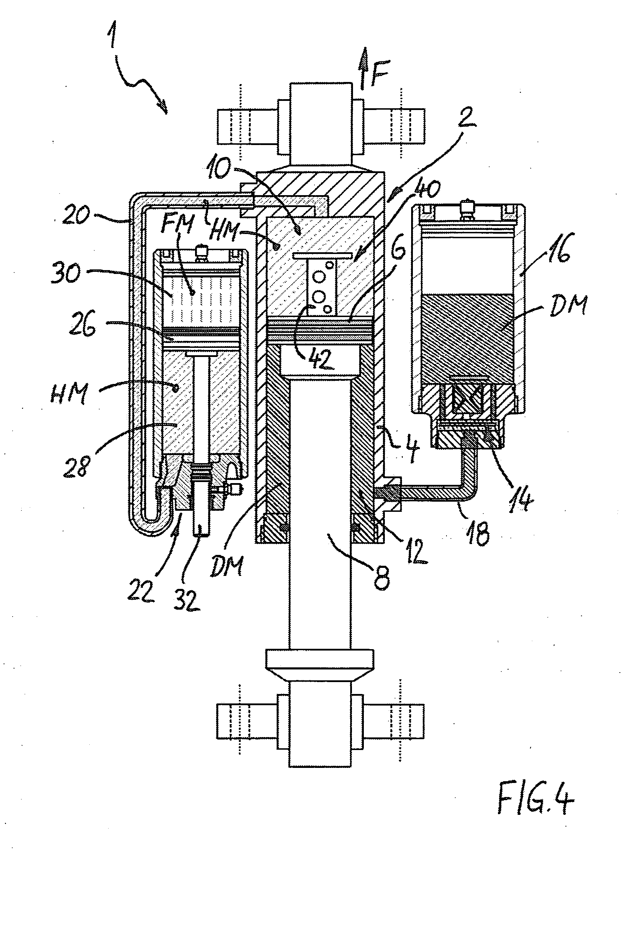

Bei der Ausführung gemäß Fig. 4 bis 6 ist demgegenüber vorgesehen, dass der Trennkolben 26 eine sich axial durch den Speicherraum 28 hindurch erstreckende und abgedichtet aus dem Speicherzylinder 24 nach außen geführte Trennkolbenstange 32 aufweist. Durch die Trennkolbenstange 32 wird einerseits eine zusätzliche Führung des Trennkolbens 26 gegen Verkippen erreicht, so dass der Trennkolben 26 selbst mit kürzerer axialer Länge ausgeführt sein kann. Dadurch kann insgesamt Baulänge des Federspeichers 22 eingespart werden. Andererseits wirkt der Federspeicher 22 in dieser Ausführung aufgrund der Trennkolbenstange 32 auch als Druckwandler derart, dass der Druck des Federmediums FM stets kleiner als der Druck des Hydraulikmediums HM ist. Dies liegt daran, dass die jeweils mit Druck beaufschlagten gegenüberliegenden Flächen des Trennkolbens 26 unterschiedlich groß sind. Auf der Seite der Federkammer 30 wird eine größere Oberfläche von dem Federmedium FM beaufschlagt, so dass für ein statisches Gleichgewicht des Trennkolbens 26 ein geringerer Druck des Federmediums FM ausreicht. Mit anderen Worten, muß der gegenüberliegende Druck des Hydraulikmediums HM wegen der die Trennkolbenstange 32 umschließenden kleineren Ringfläche des Trennkolbens 26 größer sein, um den Trennkolben 26 im Gleichgewicht zu halten.

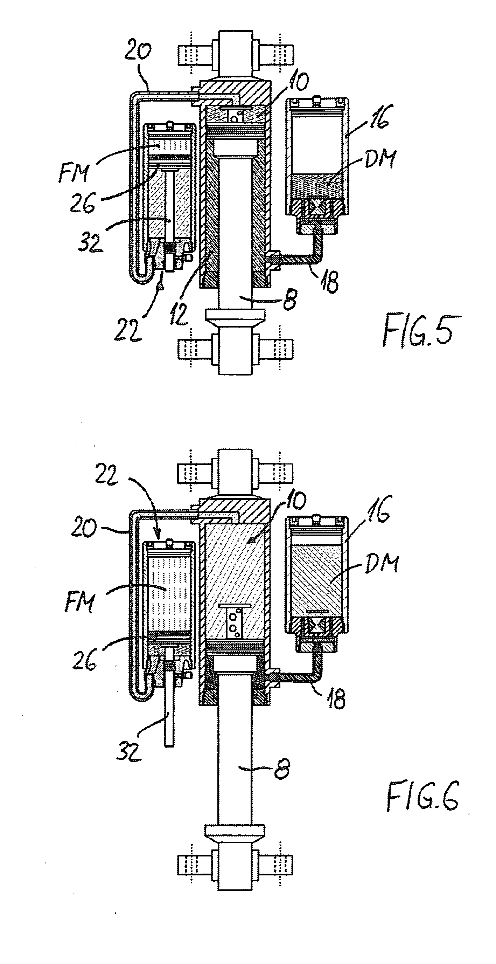

Wie weiter in Fig. 4 bis 6 und auch in Fig. 11 dargestellt ist, ist der Federspeicher 22 bevorzugt parallel neben dem Federzylinder 2 angeordnet, und zwar insbesondere in einer Ausrichtung, in der die Kolbenstange 8 des Federzylinders 2 und die Trennkolbenstange 32 des Federspeichers 22 mit jeweils gleichläufigen Bewegungsrichtungen in die gleiche Richtung weisen. Wie sich aus den Darstellungen in Fig. 5 und 6 ergibt, bewegt sich die Trennkolbenstange 32 aus dem Federspeicher 22 heraus, wenn auch der Federzylinder 2 ausfedert, d. h. wenn die Kolbenstange 8 sich ebenfalls aus dem Zylinder 4 herausbewegt. Hierdurch werden Kollisionsprobleme mit anderen Fahrzeug-Bauteilen bei den Fahrzeug-Federungsbewegungen vermieden.

Bei der Ausführung gemäß Fig. 7 bis 9 ist der erste Arbeitsraum 10 des Federzylinders 2 direkt mit dem elastisch kompressiblen Federmedium FM gefüllt, so dass der Kolben 6 unmittelbar gegen das Federmedium FM wirkt. Dadurch erübrigt sich ein zusätzlicher, externer Federspeicher 22. Daraus resultiert eine besonders kompakte und leichtgewichtige Bauform der Federungs- und Dämpfungseinrichtung 1. Da sich das kompressible Federmedium FM aber nicht beliebig, und insbesondere nicht bis auf ein Nullvolumen komprimieren läßt, ist bei dieser Ausführung ein Mindest-Restvolumen durch einen Hohlraum 34 innerhalb des Kolbens 6 und der Kolbenstange 8 gebildet.

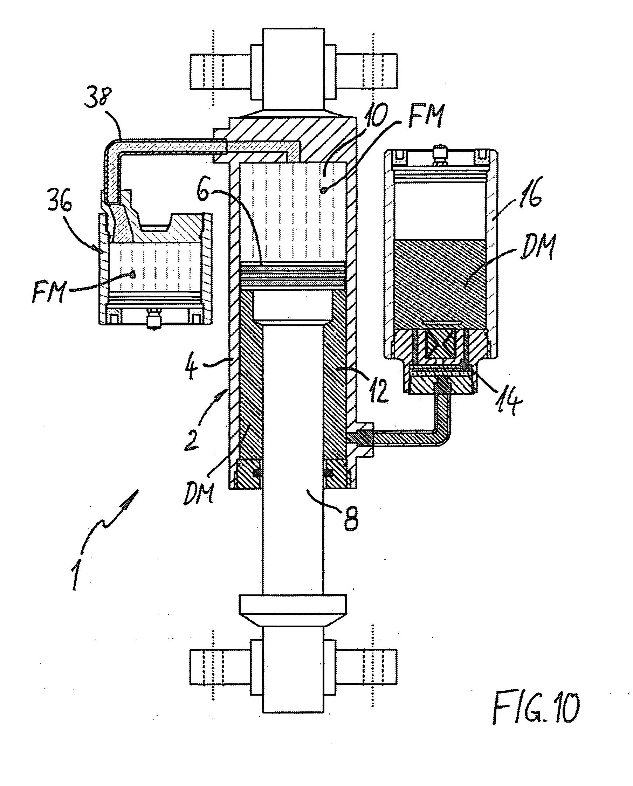

Alternativ oder aber zusätzlich zu dem Hohlraum 34 kann gemäß Fig. 10 ein externer Zusatzbehälter 36 über eine Leitung 38 mit dem ersten Arbeitsraum 10 verbunden sein. Auch bei dieser Ausführung ist direkt in dem ersten Arbeitsraum 10 das elastische Federmedium FM angeordnet.

Als kompressibles Federmedium FM kann insbesondere ein gasförmiges Medium verwendet werden, beispielsweise Stickstoff. Alternativ ist auch ein beliebiges anderes, beispielsweise liquides oder pastöses (hochviskoses) Medium geeignet. Als Dämpfungsmedium DM und/oder Hydraulikmedium HM kann ein übliches, insbesondere niederviskoses Hydrauliköl verwendet werden.

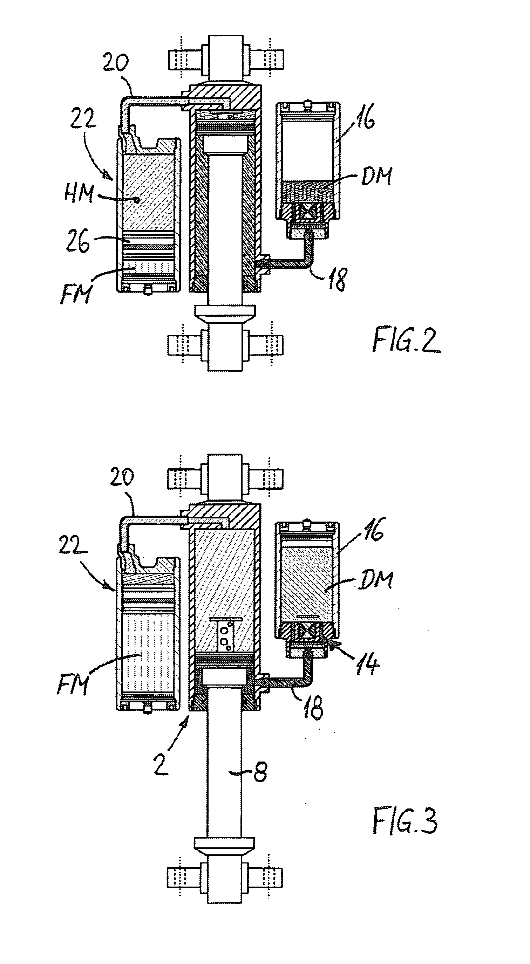

Wie sich noch aus Fig. 1 bis 6 ergibt, ist der Federzylinder 2 vorzugsweise mit einer Einrichtung zur hydraulischen Endlagendämpfung ausgestattet. Diese Endlagendämpfung ist in Fig. 1 und 4 jeweils mit der Bezugsziffer 40 bezeichnet. Diese Endlagendämpfung 40 wirkt bevorzugt in Einfederungsrichtung derart, dass eine Abbremsung der Federungsbewegungen jeweils gegen Ende des Einfederungshubes vor Erreichen eines mechanischen Endanschlages gewährleistet ist. Konkret handelt es sich um eine wegabhängige hydraulische Drosseleinrichtung mit einem teleskopartig in den Kolben 6 verschiebbaren Stößel 42, der einen axialen Strömungskanal aufweist, in den mehrere radiale, über die Länge verteilt angeordnete Queröffnungen münden. Durch das Eintauchen des Stößels 42 in den Kolben 6 werden bei Bewegung bis in die Endanschlagstellung die Queröffnungen sukzessive nacheinander verschlossen. Dadurch wird der Strömungswiderstand sukzessive vergrößert, weil das Hydraulikmedium HM bei mechanischer Anlage des Stößels 42 im Bereich einer Ausströmöffnung des Zylinders 4 (siehe hierzu die Stellungen in Fig. 2 und 5) nur über die Queröffnungen und den axialen Kanal des Stößels 42 ausströmen kann. Dadurch wird die jeweilige Bewegung sanft abgebremst; ein harter Endanschlag wird vorteilhafterweise vermieden.

In Fig. 11 ist schließlich noch eine hydraulische Nivelliereinrichtung 44 veranschaulicht, die derart ausgebildet ist, dass ein statisches Fahrzeugniveau durch Zuführen oder Ablassen von Hydraulikmedium HM in den oder aus dem Federkreislauf veränderbar ist. Dazu besteht die Nivelliereinrichtung 44 aus einem Schaltventil 46, einem Tank 48 und einer Pumpe 50. Das Schaltventil 46 ist als 3/3-Wegeventil ausgeführt und in der dargestellten Stellung geschlossen. In einer ersten Schaltstellung läßt sich die Pumpe 50 mit dem Federungskreislauf verbinden, um Hydraulikmedium zuzuführen und dadurch das Niveau anzuheben. In einer zweiten Schaltstellung wird der Federungskreislauf mit dem Tank 48 verbunden, um zur Niveau-Absenkung Hydraulikmedium abzulassen.

Die Erfindung ist nicht auf die dargestellten und beschriebenen Ausführungsbeispiele beschränkt, sondern umfaßt auch alle im Sinne der Erfindung gleichwirkenden Ausführungen.

## Patentansprüche

1. Federungs- und Dämpfungseinrichtung (1) zur lasttragenden und federnden Rad-Abstützung und zum Dämpfen von Federungsbewegungen in einem Kraftfahrzeug, bestehend aus mindestens einem Federzylinder (2) mit einem in einem Zylinder (4) relativbeweglich geführten Kolben (6), der zur Erzeugung einer lasttragenden Tragfederkraft (F) gegen ein elastisch kompressibles Federmedium (FM) wirkt, wobei der Kolben (6) einseitig eine umfangsgemäß abgedichtet aus dem Zylinder (4) nach außen geführte Kolbenstange (8) aufweist, und wobei der Kolben (6) innerhalb des Zylinders (4) zwei Arbeitsräume (10, 12) voneinander trennt, und zwar einen als zylindrischer Raum auf der der Kolbenstange (8) gegenüberliegenden Seite angeordneten ersten Arbeitsraum (10) von einem als Ringraum die Kolbenstange (8) hohlzylindrisch umschließenden zweiten Arbeitsraum (12),
**dadurch gekennzeichnet, dass** zum Dämpfen ein separater, von dem Federmedium (FM) unabhängiger Kreislauf eines hydraulischen Dämpfungsmediums (DM) vorgesehen ist, indem der zylindrische erste Arbeitsraum (10) dem Federmedium (FM) und der hohlzylindrische , zweite Arbeitsraum (12) dem Dämpfungsmedium (DM) zugeordnet sind, wobei die Kolbenstange (8) als Kühlelement zur Kühlung des sich bei Dämpfung bzw. Drosselung erwärmenden Dämpfungsmediums (DM) wirkt.

2. Federungs- und Dämpfungseinrichtung nach Anspruch 1,
**dadurch gekennzeichnet, dass** der erste Arbeitsraum (10) mit dem elastisch kompressiblen Federmedium (FM) gefüllt ist.

3. Federungs- und Dämpfungseinrichtung nach Anspruch 1 oder 2,
**dadurch gekennzeichnet, dass** der erste Arbeitsraum (10) über eine Leitung (20) mit einem das elastisch kompressible Federmedium (FM) enthaltenden Federspeicher (22) verbunden ist.

4. Federungs- und Dämpfungseinrichtung nach Anspruch 3,
**dadurch gekennzeichnet, dass** der Federspeicher (22) als hydropneumatischer Kolbenspeicher mit einem in einem Speicherzylinder (24) freibeweglichen Trennkolben (26) ausgebildet ist, wobei der Trennkolben (26) einen hydraulisch mit dem ersten Arbeitsraum (10) verbundenen Speicherraum (28) von einer das Federmedium (FM) enthaltenden Federkammer (30) trennt, und wobei der erste Arbeitsraum (10) und der Speicherraum (28) mit einem Hydraulikmedium (HM) gefüllt sind.

5. Federungs- und Dämpfungseinrichtung nach Anspruch 4,
**dadurch gekennzeichnet, dass** der Federspeicher (22) als Druckwandler derart ausgebildet ist, dass der Druck des Federmediums (FM) kleiner als der Druck des Hydraulikmediums (HM) ist.

6. Federungs- und Dämpfungseinrichtung nach Anspruch 4 oder 5,
**dadurch gekennzeichnet, dass** der Trennkolben (26) eine sich axial durch den Speicherraum (28) erstreckende und abgedichtet aus dem Speicherzylinder (24) geführte Trennkolbenstange (32) aufweist.

7. Federungs- und Dämpfungseinrichtung nach einem der Ansprüche 3 bis 6,
**dadurch gekennzeichnet, dass** der Federspeicher (22) parallel neben dem Federzylinder (2) angeordnet ist, und zwar insbesondere in einer Ausrichtung, in der die Kolbenstange (8) und die Trennkolbenstange (32) mit gleichläufigen Bewegungsrichtungen jeweils in die gleiche Richtung weisen.

8. Federungs- und Dämpfungseinrichtung nach einem der Ansprüche 1 bis 7,
**dadurch gekennzeichnet, dass** als kompressibles Federmedium (FM) ein gasförmiges und/oder liquides Medium vorgesehen ist.

9. Federungs- und Dämpfungseinrichtung nach einem der Ansprüche 1 bis 8,
**dadurch gekennzeichnet, dass** der zweite Arbeitsraum (12) über eine Dämpfungsventilanordnung (14) mit einem Hydraulikbehälter (16) verbunden ist.

10. Federungs- und Dämpfungseinrichtung nach Anspruch 9,
**dadurch gekennzeichnet, dass** die Dämpfungsventilanordnung (14) in einem Einlassbereich des Hydraulikbehälters (16) angeordnet ist.

11. Federungs- und Dämpfungseinrichtung nach Anspruch 9 oder 10,
**dadurch gekennzeichnet, dass** derHydraulikbehälter(16) über eine Leitung (18) mit dem zweiten Arbeitsraum (12) des Federzylinders (2) verbunden und insbesondere parallel neben dem Federzylinder (2) angeordnet ist.

12. Federungs- und Dämpfungseinrichtung nach einem der Ansprüche 1 bis 11,
**gekennzeichnet durch** insbesondere in Einfederungsrichtung wirksame Mittel zur Endlagendämpfung des Federzylinders (2).

13. Federungs- und Dämpfungseinrichtung nach einem der Ansprüche 1 bis 12,
**gekennzeichnet durch** eine hydraulische Nivelliereinrichtung (44) derart, dass ein statisches Fahrzeug-Niveau **durch** Zuführen oder Ablassen von Hydraulikmedium (HM) in den oder aus dem Federkreislauf veränderbar ist.

## Claims

1. Suspension and damping device (1) for load-carrying and resilient wheel support and for damping suspension movements in a motor vehicle, comprising at least one spring cylinder (2) having a piston (6) which is guided relatively movably in a cylinder (4) and which, to produce a load-carrying supporting spring force (F), acts against an elastically compressible spring medium (FM), the piston (6) having on one side a piston rod (8) which is led outwards out of the cylinder (4) in a circumferentially sealed manner, and the piston (6) separating two working spaces (10, 12) from one another inside the cylinder (4), namely a first working space (10) arranged as a cylindrical space on the side opposite the piston rod (8) from a second working space (12) surrounding the piston rod (8) hollow-cylindrically as an annular space,
**characterised in that** a separate circuit, independent of the spring medium (FM), of a hydraulic damping medium (DM) is provided for the damping by the cylindrical first working space (10) being assigned to the spring medium (FM) and the hollow-cylindrical second working space (12) being assigned to the damping medium (DM), the piston rod (8) acting as a cooling element for cooling the damping medium (DM) which heats up during damping or throttling.

2. Suspension and damping device according to Claim 1,
**characterised in that** the first working space (10) is filled with the elastically compressible spring medium (FM).

3. Suspension and damping device according to Claim 1 or 2,
**characterised in that** the first working space (10) is connected via a line (20) to a spring accumulator (22) containing the elastically compressible spring medium (FM).

4. Suspension and damping device according to Claim 3,
**characterised in that** the spring accumulator (22) is designed as a hydropneumatic piston accumulator with a separating piston (26) freely movable in an accumulator cylinder (24), the separating piston (26) separating an accumulator space (28), connected hydraulically to the first working space (10), from a spring chamber (30) containing the spring medium (FM), and the first working space (10) and the accumulator space (28) being filled with a hydraulic medium (HM).

5. Suspension and damping device according to Claim 4,
**characterised in that** the spring accumulator (22) is designed as a pressure converter such that the pressure of the spring medium (FM) is less than the pressure of the hydraulic medium (HM).

6. Suspension and damping device according to Claim 4 or 5,
**characterised in that** the separating piston (26) has a separating-piston rod (32) extending axially through the accumulator space (28) and led out of the accumulator cylinder (24) in a sealed manner.

7. Suspension and damping device according to one of Claims 3 to 6,
**characterised in that** the spring accumulator (22) is arranged parallel beside the spring cylinder (2), in particular in an orientation in which the piston rod (8) and the separating-piston rod (32), with the same movement directions, each point in the same direction.

8. Suspension and damping device according to one of Claims 1 to 7,
**characterised in that** a gaseous and/or liquid medium is provided as the compressible spring medium (FM).

9. Suspension and damping device according to one of Claims 1 to 8,
**characterised in that** the second working space (12) is connected to a hydraulic reservoir (16) via a damping valve arrangement (14).

10. Suspension and damping device according to Claim 9,
**characterised in that** the damping valve arrangement (14) is arranged in an inlet region of the hydraulic reservoir (16).

11. Suspension and damping device according to Claim 9 or 10,
**characterised in that** the hydraulic reservoir (16) is connected to the second working space (12) of the spring cylinder (2) via a line (18) and is arranged, in particular, parallel beside the spring cylinder (2).

12. Suspension and damping device according to one of Claims 1 to 11,
**characterised by** means for end-of-travel damping of the spring cylinder (2) which act in particular in the compression direction.

13. Suspension and damping device according to one of Claims 1 to 12,
**characterised by** a hydraulic levelling device (44) such that a static vehicle level can be changed by feeding hydraulic medium (HM) into or draining it from the spring circuit.

## Revendications

1. Dispositif de suspension et d'amortissement (1) destiné à la suspension porteuse de charge et élastique des roues et à l'amortissement des mouvements de suspension dans un véhicule motorisé, ce dispositif de suspension étant constitué d'au moins un cylindre de suspension (2) avec un piston (6) guidé de manière relativement mobile dans un cylindre (4) et agissant contre un milieu formant ressort (FM) élastiquement compressible pour générer une force de ressort de suspension (F) porteuse de charge, le piston (6) présentant d'un côté une tige de piston (8) étanchéifiée sur sa périphérie, guidée vers l'extérieur hors du cylindre (4), et le piston (6) séparant l'une de l'autre deux chambres de travail (10, 12) à l'intérieur du cylindre (4), à savoir une première chambre de travail (10) disposée sous forme d'espace cylindrique sur le côté opposé à la tige de piston (8) et une deuxième chambre de travail (12) entourant la tige de piston (8) de manière cylindrique creuse sous forme d'espace annulaire,
**caractérisé en ce qu'**un circuit de milieu amortisseur hydraulique (DM) séparé, indépendant du milieu formant ressort (FM) est prévu pour l'amortissement, dans lequel la première chambre de travail cylindrique (10) est associée au milieu formant ressort (FM) et la deuxième chambre de travail cylindrique creuse (12) est associée au milieu amortisseur (DM), la tige de piston (8) agissant comme élément de refroidissement pour refroidir le milieu amortisseur (DM) s'échauffant lors de l'amortissement et/ou de l'étranglement.

2. Dispositif de suspension et d'amortissement selon la revendication 1,
**caractérisé en ce que** la première chambre de travail (10) est remplie du milieu formant ressort (FM) élastiquement compressible.

3. Dispositif de suspension et d'amortissement selon la revendication 1 ou 2,
**caractérisé en ce que** la première chambre de travail (10) est reliée à un
accumulateur de suspension (22) contenant le milieu formant ressort (FM) élastiquement compressible par le biais d'une conduite (20).

4. Dispositif de suspension et d'amortissement selon la revendication 3,
**caractérisé en ce que** l'accumulateur de suspension (22) est réalisé sous forme d'accumulateur à piston hydropneumatique avec un piston de séparation (26) librement mobile dans un cylindre accumulateur (24), le piston de séparation (26) séparant une chambre d'accumulation (28), reliée hydrauliquement à la première chambre de travail (10), d'une chambre ressort (30) contenant le milieu formant ressort (FM), la première chambre de travail (10) et la chambre d'accumulation (28) étant remplies d'un milieu hydraulique (HM).

5. Dispositif de suspension et d'amortissement selon la revendication 4,
**caractérisé en ce que** l'accumulateur de suspension (22) est réalisé sous forme de convertisseur de pression de telle sorte que la pression du milieu formant ressort (FM) est inférieure à la pression du milieu hydraulique (HM).

6. Dispositif de suspension et d'amortissement selon la revendication 4 ou 5,
**caractérisé en ce que** le piston de séparation (26) présente une tige de piston de séparation (32) s'étendant axialement à travers la chambre d'accumulation (28) et guidée de manière étanche hors du cylindre accumulateur (24).

7. Dispositif de suspension et d'amortissement selon l'une quelconque des revendications 3 à 6,
**caractérisé en ce que** l'accumulateur de suspension (22) est disposé de manière parallèle à côté du cylindre de suspension (2) et ce en particulier selon une orientation, dans laquelle la tige de piston (8) et la tige de piston de séparation (32) avec les mêmes sens de déplacement sont dirigées respectivement dans le même sens.

8. Dispositif de suspension et d'amortissement selon l'une quelconque des revendications 1 à 7,
**caractérisé en ce qu'**un milieu gazeux et/ou liquide est prévu sous forme de milieu formant ressort (FM) compressible.

9. Dispositif de suspension et d'amortissement selon l'une quelconque des revendications 1 à 8,
**caractérisé en ce que** la deuxième chambre de travail (12) est reliée à un conteneur hydraulique (16) par le bais d'un agencement de soupapes d'amortissement (14).

10. Dispositif de suspension et d'amortissement selon la revendication 9,
**caractérisé en ce que** l'agencement de soupapes d'amortissement (14) est disposé dans une zone d'entrée du conteneur hydraulique (16).

11. Dispositif de suspension et d'amortissement selon la revendication 9 ou 10,
**caractérisé en ce que** le conteneur hydraulique (16) est relié à la deuxième chambre de travail (12) du cylindre de suspension (2) par le biais d'une conduite (18) et est disposé en particulier de manière parallèle à côté du cylindre de suspension (2).

12. Dispositif de suspension et d'amortissement selon l'une quelconque des revendications 1 à 11,
**caractérisé par** des moyens actifs en particulier dans le sens de compression pour l'amortissement fin de course du cylindre de suspension (2).

13. Dispositif de suspension et d'amortissement selon l'une quelconque des revendications 1 à 12,
**caractérisé par** un dispositif de nivellement hydraulique (44) permettant de modifier l'assiette statique d'un véhicule par amenée ou évacuation de milieu hydraulique (HM) dans ou hors du circuit de suspension.
